# NEW EUROPEAN PATENT SPECIFICATION

(11) **EP 3 111 758 B2**
(45) Date of publication and mention of the opposition decision: **24.08.2022**
(45) Mention of the grant of the patent: 08.05.2019
(21) Application number: 16177282.7
(22) Date of filing: 30.06.2016
(51) Int. Cl.: A01K 5/00

(54) **MIXER WAGON FOR ANIMAL FEED MIXTURES**
MISCHWAGEN FÜR TIERFUTTERMISCHUNGEN
WAGON MÉLANGEUR D'ALIMENTS POUR ANIMAUX

(30) Priority: 01.07.2015 IT UB20151771
(43) Date of publication of application: 04.01.2017
(73) Proprietor: Faresin Industries S.p.A., 36042 Breganze VI (IT)
(72) Inventor: FARESIN, Sante, 36042 Breganze VI (IT)
(74) Representative: Herrmann, Jochen

(56) References cited:
- EP-A1- 0 562 594
- EP-A1- 0 659 470
- EP-A1- 0 880 890
- EP-A1- 1 660 789
- EP-A1- 2 860 426
- EP-A2- 1 561 971
- WO-A1-95/33550
- DE-A1- 2 335 629
- FR-A1- 2 412 761
- US-A- 4 008 628
- US-A1- 2012 231 914
- Karl Renius: "Continuously variable tractor transmissions", , 1 February 2005 (2005-02-01),

## Description

The present invention relates to a mixer wagon for animal feed mixtures.

Feed mixtures for farm animals are currently usually prepared by introducing in a mixer wagon the components of the mixture in the sequence and at the doses defined by a specific recipe, which in turn is established and defined on the basis of the type of animal, its age, its conditions and in general the production for which it is intended.

The operator who prepares the mixer wagon fills it by sequentially arranging it adjacent to the devices for the accumulation of the components by drawing from them the indicated doses in the quantity and in the sequence defined by the recipe.

Depending on the type of component, such component can be stored in a silo, from which the operator loads it into the mixer wagon by means of a loading hopper; other components, such as for example silage, are accumulated in horizontal vats or decks, for which they are picked up either by means of a mill that breaks them up and loads them by means of a conveyor belt in the mixer truck or with other machines, such as for example a tractor or a telescopic lifting unit provided with a shovel.

The components picked up in the mixer wagon are mixed therein by one or more horizontal or vertical augers, which, equipped with blades along their perimetric profile, shred and mix the components introduced into a blend that is as uniform as possible.

The mixing augers, or a single auger, are normally moved by means of a kinematic chain that is constituted, in its simplest form, by a Cardan shaft that transmits power from an engine (in the case of trucks for administering foods of the self-propelled "unifeed" type) or from the power takeoff of a tractor (in the case of towed "unifeed" wagons) to the input shaft of a reduction unit, and by another Cardan shaft that transmits the power to the auger or augers from the output shaft of a reduction unit.

As a function of the progressive filling of the mixer wagon or of the nature of the component being processed or of the requirements of particular steps of the process, for example unloading of the product or cleaning of the augers, it may be necessary to modulate, i.e., increase or decrease, the speed of the augers, in order to obtain for example a higher torque or a greater centrifugal thrust generated on the material being processed by the peripheral speed of the auger.

In order to meet this operating requirement, mixer wagons are known which are provided with means for transmitting the torque to the augers which are more complex than the simple kinematic chain described above and comprise, upstream of the reduction units of the augers, a gearbox of the mechanical type that returns in output the received power in two or more steps, each step being characterized by a given fixed rotation rate of the output shaft of said gearbox, as a function of the reduction ratio between the meshed gears of the gearbox.

Gear changing can occur by manual actuation or by automatic actuation; in this last case, sensors acquire significant data within the system, for example the weight of the components or the torque at the auger or the temperature on the transmission or the pressure of the oil on the clutch, and as a function of the acquired data, by means of a controller, the gear shifting order is imparted, shifting up or down depending on the criteria set in said controller.

In both cases, both with manual actuation and with automatic actuation, gear changing requires interrupting the transmission of power by means of a clutch.

This interruption can be more or less long, but even in the case of automatic actuation of the gearbox, in which the interruption is extremely short, it still produces a peak of mechanical stress when the transmission of power is restored, a phenomenon which leads to problems in wear and risks of failure of the mechanical components of the kinematic chain of torque transmission.

Furthermore, in known embodiments, the variation in speed inside the transmission means occurs always by means of a gearbox the ratios of which are determined and fixed and therefore the variation of the power, torque and speed factors occurs by fixed and determined steps, with no flexibility with respect to the real and instantaneous operating requirements inside the mixer wagon.

EP0880890 A1 discloses a mixer wagon for animal feed mixtures, comprising, on a supporting chassis, a containment body containing at least one mixing auger with speed reduction unit, said mixing auger being turned by torque transmission means interposed between said at least one auger and motor means, wherein said torque transmission means comprise a hydromechanical continuously variable transmission comprising, inside a housing fixed to the chassis an epicyclic reduction unit.

EP 0 659 470 A1 discloses a transmission for a truck having a wheeled chassis supporting an inverted frustum-shaped container contain a shredding and mixing scroll, the transmission comprising a tracked-type epicyclic reduction unit mounted on the bottom of the container and supporting the scroll in a cantilevered manner, the reduction unit being coupled to a hydraulic motor connected to a pump which is in turn coupled to a drive unit.

WO 95/33550 A1 discloses a trailer feed mixer comprising, on a mixer frame a mixer housing containing a tapered auger with a right angle planetary gear box, said auger being turned by a variable power transfer device interposed between said auger and a drive shaft. The variable power transfer device is capable of automatically reducing or increasing the rotational speed of the auger in response to an increase or decrease respectively in the power load that the auger places on the drive shaft. The variable power transfer device may be an automatic transmission commonly used in vehicles, or a variable speed pressure sensitive fluid driven motor capable of changing the rotational speed of its output in response to changes in fluid pressure at its inlet.

The aim of the present invention is to provide a mixer wagon for animal feed mixes that is capable of obviating the cited limitations of mixer wagons of the known type.

Within this aim, an object of the invention is to provide a mixer wagon that is capable of adapting to the load situations for the augers more precisely, more effectively and more efficiently than can be provided with a mixer wagon of the known type.

Another object of the invention is to provide a mixer wagon having a performance that is not inferior to that of mixer wagons of the known type.

In accordance with the invention, there is provided a mixer wagon for animal feed mixtures as defined in the appended claims.

Further characteristics and advantages of the invention will become better apparent from the description of a preferred but not exclusive embodiment of the mixer wagon according to the invention, illustrated by way of nonlimiting example in the accompanying drawings, wherein:
Figure 1 is a schematic side view of a mixer wagon according to the invention;

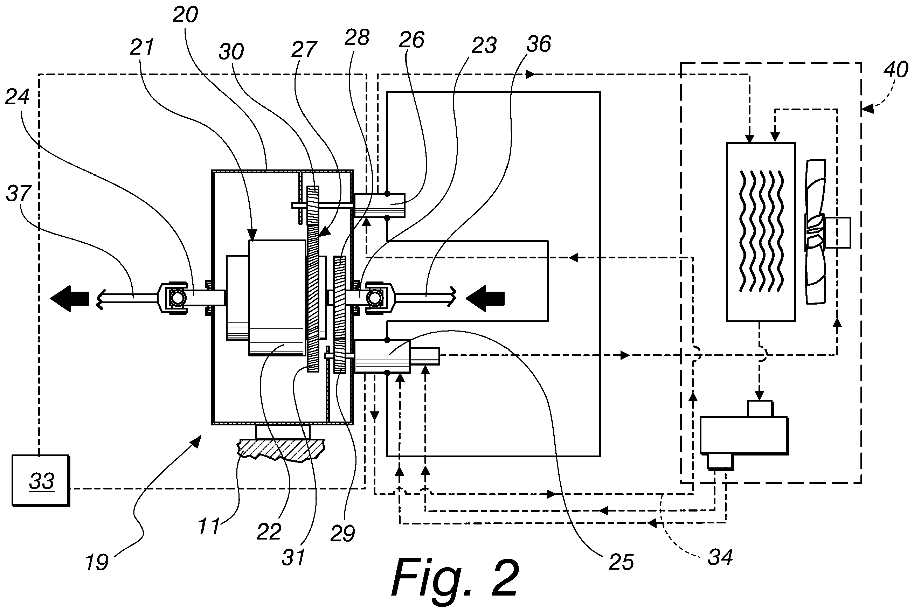

Figure 2 is a schematic side view of a hydrodynamic continuously variable transmission comprised in the mixer wagon according to the invention.

With reference to the figures, a mixer wagon for animal feed mixtures according to the invention is designated generally by the numeral 10.

The mixer wagon 10 comprises, on a supporting chassis 11, a containment body 12, which contains two mixing augers 13 and 14, each with a corresponding speed reduction unit 15 and 16.

The mixing augers 13 and 14 are turned by virtue of torque transmission means 17 which are interposed between the reduction unit 15 of a first auger 13 and motor means 18, for example a power takeoff of a tractor, or directly an internal combustion engine, and a universal joint 38 interposed between the two reduction units 15 and 16.

The particularity of the mixer wagon 10 according to the invention resides in that the torque transmission means comprise a hydromechanical continuously variable transmission 19, instead of a mechanical gearbox with two or more steps as in mixer wagons of the known type.

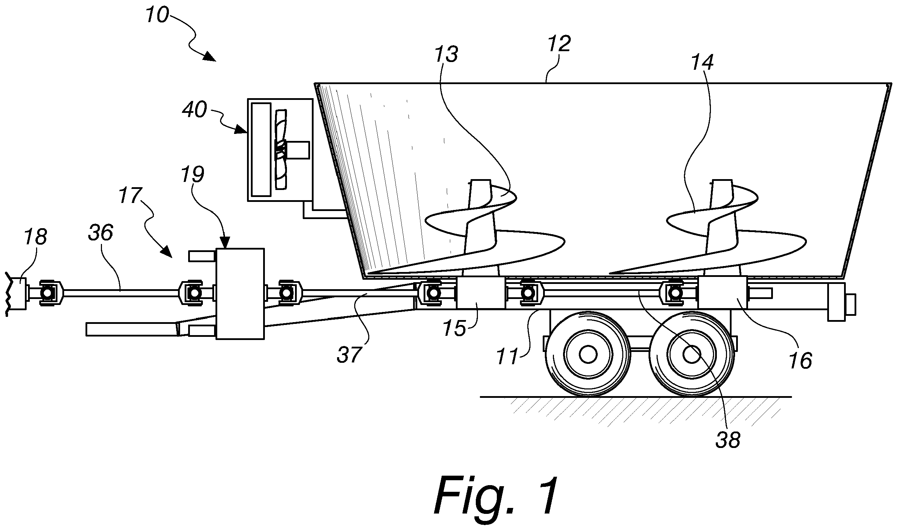

In one of its embodiments, which is described here by way of non limiting example of the invention, the hydromechanical continuously variable transmission 19 comprises, inside a housing 20 fixed to the chassis 11 of Figure 1:
- an epicyclic reduction unit 21, comprising in turn a gear containment casing 22, a power input shaft 23 and a power output shaft 24; the epicyclic reduction unit 21 is supported by means of said power input shaft 23 and said power output shaft 24, which functionally protrude from said housing 20; the shafts 23 and 24 rest on the housing 20 by means of corresponding bearings or other equivalent friction reduction elements;
- a hydrostatic pump 25, fixed to the housing 20 and actuated by the rotation of the power input shaft 23 by means of a corresponding pump actuation mechanism,
- a hydrostatic motor 26, fixed to the housing 20 and actuated by the hydrostatic pump 25,
- a mechanism 27 for rotating the casing 22 of the epicyclic reduction unit 21, the mechanism 27 being actuated by the hydrostatic motor 26.

The actuation mechanism for the hydrostatic pump 25 comprises a driving gear 28, which is fixed to the power input shaft 23, and a driven gear 29, which is fixed to the rotation shaft of said hydrostatic pump 25 and meshes with said driving gear 28.

The mechanism for the rotation of the casing 22 of the epicyclic reduction unit 21 comprises a driving gear 30, which is fixed to the rotation shaft of said hydrostatic motor 26, and a driven gear 31, which is fixed so as to surround the casing 22 and meshes directly with said driving gear 30.

As an alternative, the driven gear can mesh indirectly with the driving gear by means of one or more transmission shafts.

The hydrostatic pump 25 is of the variable displacement type.

The continuously variable transmission 19 comprises also a unit for controlling the hydraulic system 33 that is preset to vary the quantity of pressurized oil introduced by the hydrostatic pump 25 in the circuit 34, which connects it hydraulically to the hydrostatic motor 26, which in turn, depending on the quantity of oil sent by the pump, is stationary or rotates at a speed comprised between zero and a maximum design speed.

The torque transmission means comprise a first universal joint 36 for connection between the motor means 18 and the power input shaft 23 of the continuously variable transmission 19 and a second universal joint 37 for connection between the power output shaft 24 and the reduction unit 15 of the at least one mixing auger 13.

The mixer wagon 10 can also comprise an oil cooling and filtering circuit 40, which is to be understood as being of a per se known type.

Therefore, in the mixer wagon 10 according to the invention, a continuously variable transmission 19 is interposed in the chain for the transmission of power from the energy source, which can be constituted by an internal combustion engine or by a power takeoff of an agricultural tractor, to the energy using assembly, i.e., the mixing augers 13 and 14.

The kinematic connection between the power input shaft 23 and the hydrostatic pump 25 is stable and permanent, since the driving gear 28, associated with the power input shaft 23, and the driven gear 29, which is fixed to the rotation shaft of the hydrostatic pump 25, are always meshed together, and when the power input shaft 23 turns so does always the hydrostatic pump 25 as well.

As mentioned, the hydrostatic pump 25 is of the variable displacement type, in which it is possible, by means of the control unit 33, for example an ECU controller, to vary the quantity of pressurized oil introduced by the hydrostatic pump 25 in the circuit that connects it hydraulically to the hydrostatic motor 26, which in turn can, depending on the amount of oil sent by the pump, be stationary or rotate up to the maximum speed for which it has been built and sized.

The output of the hydrostatic motor 26, by means of its corresponding driving gear 30, is connected directly, by means of the driven gear 31 (or, as an alternative, can be connected indirectly, by means of one or more transmission shafts), to the casing 22 of the reduction unit 21, on which the driven gear 31 is fixed.

When the hydrostatic motor 26 does not receive oil from the hydrostatic pump 25, then it is stationary and, by means of the connection determined by the direct or optionally indirect meshing between the gears 30 and 31, it keeps the casing 22 of the reduction unit 21 stationary, acting as a normal rotation-preventing device.

When the motor 26 receives oil from the pump 25, it actuates and turns the casing 22 of the reduction unit 21 from zero to a speed Mmax, where Mmax is the maximum rotation speed of the casing 22.

The rotation rate of the power output shaft 24 of the reduction unit 21, and therefore of the continuously variable transmission 19, is always determined with reference to the rotation rate of the casing 22; when the casing 22 is stationary, the power output shaft 24 rotates at a speed N measured as the rotation rate in input to the power input shaft 23 by the ratio of the epicyclic reduction unit 21; when the casing 22 rotates due to the hydrostatic motor 26 at a rate of M turns, the power output shaft 24 rotates at a rate N' = N + M x (1- i).

The rotation rate variation obtained with this continuously variable transmission 19 is a continuous variation for any value within the interval between N and N'max, where N'max = N+Mmax x (1-i).

By virtue of this continuously variable transmission 19, the rotation rate of the mixing augers 13 and 14 can be changed without interrupting torque transmission between the motor means 18 and the augers, with great advantages constituted by the fact that mechanical stress peaks that are typical of known speed step gearboxes are avoided, such peaks being generated when power transmission is restored, causing wear problems and risks of failure of the mechanical components of the kinematic chain for torque transmission.

Control of the rotation rate variation can be manual, by means of a button operated directly or indirectly by the user, or automatic, by means of a signal sent by the control unit ECU 33, as a function of significant data detected in the system, for example the pressure in the pump-motor connection circuit, according to a preset logic.

In practice it has been found that the invention achieves the intended aim and objects.

In particular, the invention provides a mixer wagon that is capable of adapting to the load situations for the augers more precisely, more effectively and more efficiently than can be provided with a mixer wagon of the known type.

Moreover, the invention provides a mixer wagon with a performance that is not inferior to that of mixer wagons of the known type.

The invention thus conceived is susceptible of numerous modifications and variations, all of which are within the scope of the accompanying claims; all the details may further be replaced with other technically equivalent elements.

In practice, the components and the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A mixer wagon (10) for animal feed mixtures, comprising, on a supporting chassis (11), a containment body (12) containing at least one mixing auger (13;14) with speed reduction unit (15),
said at least one mixing auger (13; 14) being turned by torque transmission means (17) interposed between said at least one auger (13; 14) and motor means (18),
said torque transmission means (17)comprising a hydromechanical continuously variable transmission (19),
said hydromechanical continuously variable transmission (19) comprising, inside a housing (20) fixed to the chassis (11), an epicyclic reduction unit (21), comprising in turn a gear containment casing (22), a power input shaft (23) and a power output shaft (24),
said epicyclic reduction unit (21) being supported by means of said power input shaft (23) and said power output shaft (24), which functionally protrude from said housing (20),
**characterized by**
a hydrostatic pump (25), fixed to the housing (20) and actuated by the rotation of said power input shaft (23) by means of a corresponding pump actuation mechanism,
a hydrostatic motor (26), fixed to said housing (20) and actuated by said hydrostatic pump (25),
inside the housing (20), a mechanism (27) for rotating said casing (22) of the epicyclic reduction unit (21), said mechanism (27) being actuated by said hydrostatic motor (26), such that the rotation rate of the power output shaft (24) of the reduction unit (21), and therefore of the continuously variable transmission (19), is always determined with reference to the rotation rate of the casing (22), thereby permitting change of the rotation rate of the at least one mixing auger (13; 14) without interrupting torque transmission between the motor means (18) and the at least one auger (13; 14).

2. The mixer wagon (10) according to claim 1, wherein said actuation mechanism for said hydrostatic pump (25) comprises a driving gear (28), fixed to said power input shaft (23), and a driven gear (29), fixed to the rotation shaft of said hydrostatic pump (25) and meshed with said driving gear (28).

3. The mixer wagon (10) according to claim 1 or 2, wherein said mechanism for rotating said casing (22) of the epicyclic reduction unit (21) comprises a driving gear (30), fixed to the rotation shaft of said hydrostatic motor (26), and a driven gear (31), fixed so as to surround said casing (22) and meshed with said driving gear (30).

4. The mixer wagon (10) according to claim 3, wherein said driven gear (31) meshes directly with said driving gear (30).

5. The mixer wagon (10) according to claim 3, wherein said driven gear (31) meshes indirectly with said driving gear (30) by means of at least one transmission shaft.

6. The mixer wagon (10) according to any of the proceeding claims, wherein said hydrostatic pump (25) is of the variable displacement type.

7. The mixer wagon (10) according to any of the proceeding claims, wherein said continuously variable transmission (19) comprises a control unit of the hydraulic system (33) assigned to varying the quantity of pressurized oil injected by the hydrostatic pump (25) into a circuit (34) that connects it hydraulically to said hydrostatic motor (26), which in turn, depending on the quantity of oil sent by the pump (25), is stationary or turns at a speed comprised between zero and a maximum design speed.

8. The mixer wagon (10) according to any of the proceeding claims, wherein said torque transmission means (17) comprise a first universal joint (36) for connecting said motor means (18) and said power input shaft (23) of the continuously variable transmission (19) and a second universal joint (37) for connecting said power output shaft (24) and said reduction unit (15) of said at least one mixing auger (13).

## Patentansprüche

1. Ein Mischwagen (10) für Tierfuttermischungen, der auf einem Traggestell (11) einen Behälterkörper (12) umfasst, welcher mindestens eine Mischschnecke (13; 14) mit Drehzahlreduktionseinheit (15) enthält,
wobei die mindestens eine Mischschnecke (13; 14) von Drehmomentübertragungsmitteln (17) gedreht wird, die zwischen der mindestens einen Schnecke (13; 14) und Motormitteln (18) angeordnet sind,
wobei die Drehmomentübertragungsmittel (17) ein hydromechanisches kontinuierlich veränderliches Getriebe (19) umfassen,
wobei das hydromechanische kontinuierlich veränderliche Getriebe (19) in einem an dem Gestell (11) befestigten Gehäuse (20) eine Umlauf-Reduktionseinheit (21) umfasst, welche wiederum ein Getriebegehäuse (22), eine Leistungs-Antriebswelle (23) und eine Leistungs-Abtriebswelle (24) umfasst;
wobei die Umlauf-Reduktionseinheit (21) mittels der Leistungs-Antriebswelle (23) und der Leistungs-Abtriebswelle (24) gestützt wird, die funktional aus dem Gehäuse (20) herausragen,
**gekennzeichnet durch**
eine hydrostatische Pumpe (25), die an dem Gehäuse (20) befestigt ist und durch die Drehung der Leistungs-Antriebswelle (23) über einen entsprechenden Pumpenantriebsmechanismus angetrieben wird,
einen hydrostatischen Motor (26), der an dem Gehäuse (20) befestigt ist und von der hydrostatischen Pumpe (25) angetrieben wird,
in dem Gehäuse (20) einen Mechanismus (27) zum Drehen des Gehäuses (22) der Umlauf-Reduktionseinheit (21), wobei der Mechanismus (27) von dem hydrostatischen Motor (26) angetrieben wird, so dass die Rotationsrate der Leistungs-Abtriebswelle (24) der Reduktionseinheit (21), und somit des kontinuierlich veränderlichen Getriebes (19), immer bezüglich der Rotationsrate des Gehäuses (22) bestimmt wird, wodurch ein Wechsel der Rotationsrate der mindestens einen Mischschnecke (13; 14) ohne eine Drehmomentübertragung zwischen den Motormitteln (18) und der mindestens einen Mischschnecke (13; 14) zu unterbrechen.

2. Der Mischwagen (10) gemäß Anspruch 1, wobei der Antriebsmechanismus für die hydrostatische Pumpe (25) ein Antriebsrad (28), das an der Leistungs-Antriebswelle (23) befestigt ist, und ein angetriebenes Rad (29) umfasst, das an der Rotationswelle der hydrostatischen Pumpe (25) befestigt ist und in das Antriebsrad (28) eingreift.

3. Der Mischwagen (10) gemäß Anspruch 1 oder 2, wobei der Mechanismus zum Drehen des Gehäuses (22) der Umlauf-Reduktionseinheit (21) ein Antriebsrad (30), das an der Rotationswelle des hydrostatischen Motors (26) befestigt ist, und ein angetriebenes Rad (31) umfasst, das so befestigt ist, dass es das Gehäuse (22) umgibt und in das Antriebsrad (30) eingreift.

4. Der Mischwagen (10) gemäß Anspruch 3, wobei das angetriebene Rad (31) unmittelbar in das Antriebsrad (30) eingreift.

5. Der Mischwagen (10) gemäß Anspruch 3, **dadurch gekennzeichnet, dass** das angetriebene Rad (31) über mindestens eine Transmissionswelle mittelbar in das Antriebsrad (30) eingreift.

6. Der Mischwagen (10) gemäß einem oder mehreren der vorhergehenden Ansprüche, wobei die hydrostatische Pumpe (25) vom Typ mit variabler Verdrängung ist.

7. Der Mischwagen (10) gemäß einem oder mehreren der vorhergehenden Ansprüche, wobei das kontinuierlich veränderliche Getriebe (19) eine Steuereinheit des hydraulischen Systems (33) umfasst, die dazu dient, die Menge an Drucköl zu steuern, die von der hydrostatischen Pumpe (25) in einen Kreislauf (34) eingespritzt wird, der sie hydraulisch mit dem hydrostatischen Motor (26) verbindet, welcher wiederum, je nach der Menge an Öl, das von der Pumpe (25) zugeführt wird, stationär ist oder sich mit einer Geschwindigkeit zwischen null und einer maximalen Auslegungsgeschwindigkeit dreht.

8. Der Mischwagen (10) gemäß einem oder mehreren der vorhergehenden Ansprüche, wobei die Drehmomentübertragungsmittel (17) ein erstes Universalgelenk (36) zur Verbindung der Motormittel (18) und der Leistungs-Antriebswelle (23) des kontinuierlich veränderlichen Getriebes (19) und ein zweites Universalgelenk (37) zur Verbindung der Leistungs-Abtriebswelle (24) und der Reduktionseinheit (15) der mindestens einen Mischschnecke (13) umfassen.

## Revendications

1. Wagon mélangeur (10) pour des mélanges d'aliments pour animaux, comportant, sur un châssis de support (11), un corps de confinement (12) contenant au moins une tarière de mélange (13; 14) avec un réducteur de vitesse (15),
ladite au moins une tarière mélange (13; 14) étant mise en rotation par des moyens de transmission de couple (17) intercalés entre ladite au moins une tarière (13; 14) et des moyens moteurs (18),
lesdits moyens de transmission de couple (17) comportant une transmission hydromécanique à variation continue (19),
ladite transmission hydromécanique à variation continue (19) comportant, à l'intérieur d'un boîtier (20) fixé au châssis (11), un réducteur épicycloïdal (21), comportant à son tour un carter de confinement d'engrenage (22), un arbre d'entrée de puissance (23) et un arbre de sortie de puissance (24),
ledit réducteur épicycloïdal (21) étant supporté au moyen dudit arbre d'entrée de puissance (23) et dudit arbre de sortie de puissance (24), qui font fonctionnellement saillie à partir dudit boîtier (20),
**caractérisé par**
une pompe hydrostatique (25), fixée au boîtier (20) et actionnée par la rotation dudit arbre d'entrée de puissance (23) au moyen d'un mécanisme d'actionnement de pompe correspondant,
un moteur hydrostatique (26), fixé audit boîtier (20) et actionné par ladite pompe hydrostatique (25),
à l'intérieur du boîtier (20), un mécanisme (27) pour faire tourner ledit carter (22) du réducteur épicycloïdal (21), ledit mécanisme (27) étant actionné par ledit moteur hydrostatique (26), de telle sorte que la vitesse de rotation de l'arbre de sortie de puissance (24) du réducteur (21), et donc de la transmission à variation continue (19), est toujours déterminée en référence à la vitesse de rotation du carter (22), permettant ainsi de changer la vitesse de rotation de la au moins une tarière mélange (13; 14) sans interrompre la transmission du couple entre les moyens moteurs(18) et la au moins une tarière mélange (13 ; 14).

2. Wagon mélangeur (10) selon la revendication 1, **caractérisé en ce que** ledit mécanisme d'actionnement pour ladite pompe hydrostatique (25) comporte un engrenage menant (28), fixé audit arbre d'entrée de puissance (23), et un engrenage mené (29), fixé à l'arbre de rotation de ladite pompe hydrostatique (25) et en prise avec ledit engrenage menant (28).

3. Wagon mélangeur (10) selon une ou plusieurs des revendications précédentes, **caractérisé en ce que** ledit mécanisme pour faire tourner ledit carter (22) du réducteur épicycloïdal (21) comporte un engrenage menant (30), fixé à l'arbre de rotation dudit moteur hydrostatique (26), et un engrenage mené (31), fixé de manière à entourer ledit carter (22) et en prise avec ledit engrenage menant (30).

4. Wagon mélangeur (10) selon la revendication 3, **caractérisé en ce que** ledit engrenage mené (31) est directement en prise avec ledit engrenage menant (30).

5. Wagon mélangeur (10) selon la revendication 3, **caractérisé en ce que** ledit engrenage mené (31) est indirectement en prise avec ledit engrenage menant (30) au moyen d'au moins un arbre de transmission.

6. Wagon mélangeur (10) selon une ou plusieurs des revendications précédentes, **caractérisé en ce que** ladite pompe hydrostatique (25) est du type à cylindrée variable.

7. Wagon mélangeur (10) selon une ou plusieurs des revendications précédentes, **caractérisé en ce que** ladite transmission à variation continue (19) comporte une unité de commande du système hydraulique (33) affectée pour faire varier la quantité d'huile mise sous pression injectée par la pompe hydrostatique (25) dans un circuit (34) qui la relie hydrauliquement audit moteur hydrostatique (26), qui à son tour, en fonction de la quantité d'huile envoyée par la pompe (25), est statique ou tourne à une vitesse comprise entre zéro et une vitesse nominale maximale.

8. Wagon mélangeur (10) selon une ou plusieurs des revendications précédentes, **caractérisé en ce que** lesdits moyens de transmission de couple (17) comportent un premier joint universel (36) pour relier lesdits moyens moteurs (18) et ledit arbre d'entrée de puissance (23) de la transmission à variation continue (19) et un second joint universel (37) pour relier ledit arbre de sortie de puissance (24) et ledit réducteur (15) de ladite au moins une tarière de mélange (13).
